# EUROPÄISCHE PATENTSCHRIFT

(11) **EP 3 462 580 B1**
(45) Veröffentlichungstag und Bekanntmachung des Hinweises auf die Patenterteilung: **12.05.2021**
(21) Anmeldenummer: 18192209.7
(22) Anmeldetag: 03.09.2018
(51) Int. Cl.: H02K 5/08, H02K 5/20, H02K 7/14, H02K 5/12

(54) **FLÜSSIGKEITSDURCHSTRÖMTER GLEICHSTROMMOTOR**
DC MOTOR WITH LIQUID RUNNING THROUGH IT
MOTEUR À COURANT CONTINU TRAVERSÉ PAR UN LIQUIDE

(30) Priorität: 27.09.2017 DE 102017217153
(43) Veröffentlichungstag der Anmeldung: 03.04.2019
(73) Patentinhaber: Bühler Motor GmbH, 90459 Nürnberg (DE)
(72) Erfinder: BERNREUTHER, Georg, 90449 Nürnberg (DE)

(56) Entgegenhaltungen:
- EP-A2- 1 300 924
- WO-A1-2005/091468
- WO-A1-2013/189941
- WO-A1-2015/187233
- DE-A1-102006 029 803
- DE-A1-102011 008 523
- FR-A1- 2 910 196
- US-A- 2 428 816
- US-A- 2 654 848
- US-A- 2 698 911
- US-A- 3 560 776
- US-A- 5 015 159
- US-A1- 2006 232 143
- US-A1- 2010 295 395

## Beschreibung

Die Erfindung betrifft einen flüssigkeitsdurchströmten Gleichstrommotor (1), mit einem Lagerschild (2), einer in Nuten (11) eines Statorkerns (9) angeordneten Statorwicklung (3), welche Freiräume für Kühlkanäle (4) zwischen Statorspulen (10) der Statorwicklung (3) aufweist, und einem Permanentmagnetrotor (5).

Derartige flüssigkeitsdurchströmte Gleichstrommotoren werden beispielhaft für Pumpen, insbesondere Öl- oder Wasserpumpen eingesetzt, vielfach bei Kfz-Anwendungen. Statorspulen sind Wärmequellen und müssen insbesondere bei geringem Bauraumangebot und hoher Abgabeleistung gekühlt werden, um einen hohen Wirkungsgrad zu erreichen. Eine Möglichkeit der Wärmeabgabe besteht in der Wärmeleitung an ein Anbauteil und an die Umgebung. In vielen Fällen reicht die kühlende Wirkung dennoch nicht aus, so dass eine Flüssigkeitskühlung vorgesehen werden muss. Da bei Pumpenmotoren bereits ein Medium vorhanden ist wird zweckmäßigerweise diese für eine Flüssigkeitskühlung genutzt. Ein gattungsgemäßer Gleichstrommotor ist aus der DE 10 2015 122 234 A1 bekannt.

Bei der DE 10 2015 122 234 A1 sind Kühlkanäle zwischen den Statorspulen einer Statorwicklung als Zusatzteil eingefügt. Daneben sind ein Spaltrohr, ein Lagerschild und eine Statorbaugruppe vorgesehen. Die hohe Teileanzahl vergrößert die Toleranzkette und ist aufwändig in der Montage. Ein Zusatzteil muss eine Mindeststabilität für die Montage in die Spulenzwischenräume aufweisen, daher ist die Wandstärke relativ groß, so dass der Wärmeübergang entsprechend ungünstig ist.

Die EP 1 300 924 A2 offenbart einen Motor mit einem Lagerschild, einer in Nuten eines Statorkerns angeordneten Statorwicklung, welche Freiräume für Kühlkanäle zwischen Statorspulen der Statorwicklung aufweist und einen Permanentmagnetrotor, wobei die Kühlkanäle teilweise durch eine aus Kunststoffmaterial bestehende Statorumspritzung, welche den Statorkern und die Statorspulen einschließt, gebildet ist.

Die US 5,015,159 offenbart ferner eine Kraftstoffpumpe umfassend einen Motor mit Stator- und Rotoranordnung, einem Lagerschild und Nutabschnitten, teilweise gebildet durch eine Statorumspritzung und dem Lagerschild. Die Nutabschnitte können einen Kühleffekt erzielen und sind in Hinsicht auf die Rotoranordnung abschnittsweise offen ausgeführt.

Aus der US 2010/0295395 A1 ist eine elektrische Rotationsmaschine bekannt mit einem Motor, umfassend Rotor und einem umspritzten Stator und Ausnehmungen zur Kühlung um den Stator herum und sind in Richtung des Rotors geöffnet.

Die US 2,654,848 zeigt einen flüssigkeitsdurchströmten Elektromotor mit einem umspritzten Stator und Rotor, Lagerschild und Vertiefungen, welche in Richtung des Rotors geöffnet sind.

Aufgabe der vorliegenden Erfindung ist es daher einen fluiddurchströmten Gleichstrommotor darzustellen, der aus möglichst wenigen Bauteilen besteht und einen sehr guten Wirkungsgrad hinsichtlich der Wärmeabfuhr aus der Statorwicklung in das Fördermedium aufweist. Weiter soll eine einfache und wirtschaftliche Herstellung des Gleichstrommotors möglich sein.

Diese Aufgabe wird erfindungsgemäß durch die Merkmale des Anspruchs 1 gelöst. Die Kühlkanäle werden durch bereits vorhandene Teile gebildet, insbesondere durch das Kunststoffmaterial einer Statorumspritzung und ein Lagerschild. Dadurch sind nur noch zwei Hauptbauteile für den Stator mit Kühlkanälen erforderlich. Aufgrund der geringen Teileanzahl ist auch die Toleranzkette entsprechend verkürzt, so dass eine sehr genaue Lagezuordnung der Teile erreicht wird. Im weiteren Verlauf sind die Kühlkanäle zum Permanentmagnetrotor hin offen ausgeführt, um einen Strömungskreislauf zu ermöglichen. An dem Lagerschild ist eine achsparallel vorspringende ringförmige Lageraufnahme angeformt, deren Durchmesser an den Innendurchmesser der Statorumspritzung angepasst ist, wobei der Außenumfang der Lageraufnahme einen Teilabschnitt der Kühlkanäle bildet. Da die Lageraufnahme mit der Statorumspritzung mitgespritzt ist, lässt sich der Lagerschild sehr genau fügen.

Weiterbildungen der Erfindung werden in den Unteransprüchen dargestellt. Es ist vorgesehen, die Kühlkanäle zumindest in einem ersten Abschnitt ihrer Länge zum Permanentmagnetrotor hin geschlossen auszubilden, um einen wirkungsvollen Kühlmittelstrom zu erzeugen.

Aus fertigungstechnischen Gründen wurde vorgeschlagen, die Kühlkanäle unter einem flachen Winkel α zu einer Motordrehachse verlaufen zu lassen, wobei der Winkel α in einem Bereich zwischen 4° und 8°, vorzugsweise 6° aufweist. Hierbei sind im Spritzgusswerkzeug sich verjüngende Stege vorgesehen, die aus einem massiven Zylinder vorspringen. Diese Geometrie erleichtert eine Entformung des Werkstücks aus der Spritzgussform deutlich.

Auch die Breite der Stege und damit der Kühlkanäle ist nicht konstant, sondern sie verjüngen sich ebenfalls in Bezug auf eine Parallele zur Motorachse um 0,5 bis 2°, vorzugsweise 1,25°. Dadurch wird die Entformbarkeit weiter verbessert.

Mehrere Kühlkanäle münden in einen Sammelkanal. Dieser dient zur Zusammenführung des über die Kühlkanäle strömenden Fördermediums.

Der Sammelkanal wird in optimaler Weise ebenfalls einerseits durch die Statorumspritzung und den Lagerschild gebildet, wobei eine ringförmige nutartige Vertiefung in der Statorumspritzung von einer ebenen Ringfläche des Lagerschilds geschlossen wird. Im Grunde könnte die Vertiefung auch im Lagerschild ausgebildet sein oder in beiden Teilen. Auch eine beliebige Querschnittsform oder sich über den Umfang verändernde Querschnittsform des Sammelkanals ist ohne besonderen Aufwand durch eine entsprechende Anpassung der Werkzeugformen herstellbar.

Der Lagerschild weist einen Strömungsdurchgang vom Sammelkanal zu einer Pumpenkammer auf. Hierdurch und durch ein Kugellager wird der Kühlkreislauf geschlossen. Ein großer Vorteil der Erfindung besteht auch darin, dass für den Kühlkreislauf keine Hohlwelle verwendet werden muss. Die Herstellung von Hohlwellen ist sehr aufwändig, so dass deren Verwendung, insbesondere bei Kleinstmotoren, wirtschaftlich nicht tragbar wäre.

Die Lageraufnahme weist einen ersten Abschnitt zur Aufnahme eines Lagers, insbesondere eines Kugellagers und einen zweiten Abschnitt zur Aufnahme einer Federscheibe auf. Der erste Abschnitt weist einen geringeren Durchmesser als der zweite Abschnitt auf. Die Federscheibe verkrallt sich in den zweiten Abschnitt und hält den Außenring des Kugellagers fest. Das Lager bleibt jedoch für das Fördermedium durchlässig.

Zur Abdichtung nach Außen ist in der Statorumspritzung eine zum Lagerschild hin offene ringförmige Aufnahmenut vorgesehen, worin eine Ringschnurdichtung, auch O-Ring, einlegbar ist. Durch den Lagerschild wird die Dichtung in ihrer Aufnahmenut gehalten, er dient somit auch als Dichtfläche. Die Aufnahmenut ist radial außerhalb des Sammelkanals und des Strömungsdurchgangs angeordnet.

Die Statorumspritzung besteht aus einem Duroplastmaterial, weil hierdurch höhere Dichtheitsanforderungen eingehalten werden können als mit Thermoplastmaterial. Dies ist besonders wichtig bei Anwendungen die öldicht sein müssen.

Ein Ausführungsbeispiel der Erfindung wird nachfolgend anhand der Zeichnung näher erläutert. Es zeigen:
Fig. 1 eine Statorumspritzung,
Fig. 2 eine Schnittansicht durch die Statorumspritzung und einen Lagerschild und
Fig. 3 einen Werkzeugeinsatz.

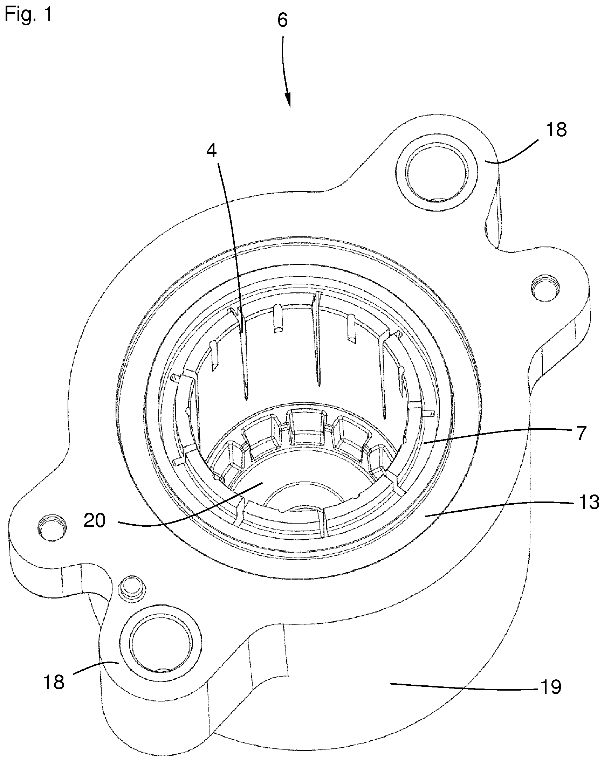

Fig. 1 zeigt eine räumliche Darstellung einer Statorumspritzung 6, in welcher ein Statorkern und eine Wicklung, bestehend aus einer Vielzahl von Spulen eingebettet sind (nicht erkennbar). Der Statorkern ist genutet und so dimensioniert, dass neben den Spulen noch Platz für einen Kühlkanal (4) je Nut verbleibt. Im gezeigten Beispiel sind neun Nuten und entsprechend viele Kühlkanäle 4 vorhanden. Erkennbar sind weiter die Außenflächen der Statorumspritzung, mit den Kühlkanälen 4, dem Sammelkanal 7 und der Aufnahmenut 13 zur Aufnahme einer Ringschnurdichtung. Weiter sind Anschraubaugen 18 dargestellt. Die Statorumspritzung 6 ist in ihrer Grundform topfförmig mit einem zylindrischen Bereich 19 und einem Topfboden 20. Wie offensichtlich ist, verjüngen sich die Kühlkanäle 4 zum Topfboden 20 hin, sowohl in ihrer Breite als auch in ihrer Tiefe.

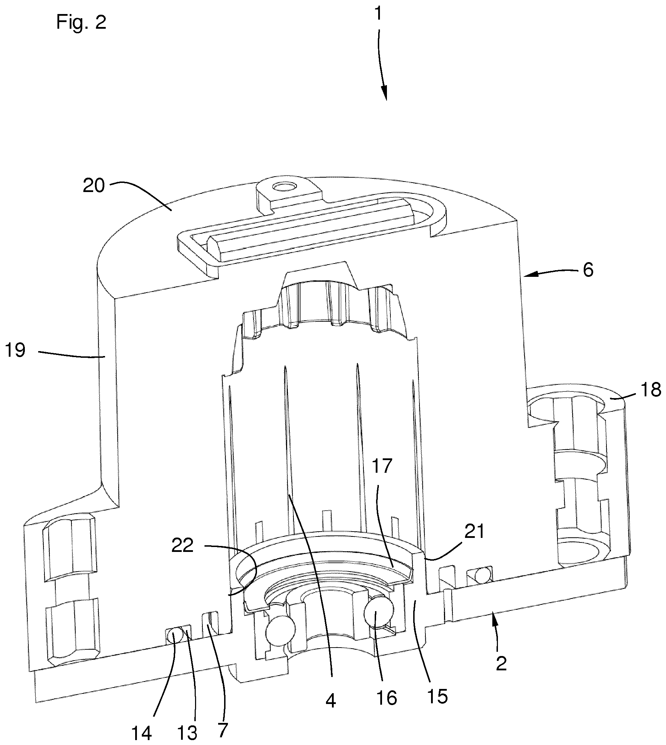

Fig. 2 zeigt eine Schnittansicht durch die Statorumspritzung 6 und einen Lagerschild 2. Die Statorumspritzung 6 weist den zylindrischen Bereich 19, den Topfboden (20), die Kühlkanäle 4, den Sammelkanal 7, die Aufnahmenut 13 für die Ringschnurdichtung 14 und die Anschraubaugen 18 auf. Der Lagerschild 2 weist eine Lageraufnahme 15, ein Kugellager 16 und eine Federscheibe 17 auf. Der Außenumfang 21 der Lageraufnahme 15 ist so an den Innenumfang 22 der Statorumspritzung 6 angepasst, dass eine exakte radiale Anordnung dieser Fügepartner möglich ist.

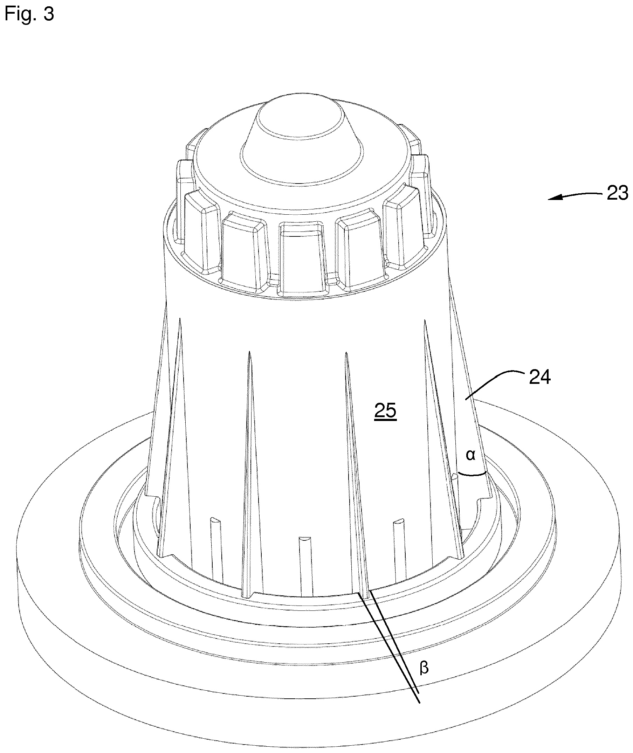

Fig. 3 zeigt einen Werkzeugeinsatz 23 für ein Spritzgusswerkzeug, mit einem massiven Zylinder 25, aus welchem eine Vielzahl sich verjüngenden Rippen 24 vorspringt. Die Rippen 24 sind sowohl in ihrer Höhe als auch in ihrer Breite nicht konstant. Hierdurch lassen sich die Werkstücke einfacher entformen und die Standzeit des Werkzeugs verlängert sich.

### Bezugszeichenliste

1 Gleichstrommotor
2 Lagerschild
3 Statorwicklung
4 Kühlkanal
5 Permanentmagnetrotor
6 Statorumspritzung
7 Sammelkanal
8 Strömungsdurchgang
9 Statorkern
10 Statorspule
11 Nut
12 Motordrehachse
13 Aufnahmenut
14 Ringschnurdichtung
15 Lageraufnahme
16 Kugellager
17 Federscheibe
18 Anschraubauge
19 Zylindrischer Bereich
20 Topfboden
21 Außenumfang
22 Innenumfang
23 Werkzeugeinsatz
24 Rippe
25 Zylinder

## Patentansprüche

1. Flüssigkeitsdurchströmter Gleichstrommotor (1), mit einem Lagerschild (2), einer in Nuten (11) eines Statorkerns angeordneten Statorwicklung (3), welche Freiräume für Kühlkanäle (4) zwischen Statorspulen der Statorwicklung (3) aufweist, und einem Permanentmagnetrotor (5) wobei die Kühlkanäle (4) teilweise durch eine aus Kunststoffmaterial bestehende Statorumspritzung (6), welche den Statorkern und die Statorspulen einschließt und teilweise durch den Lagerschild (2) gebildet sind und wobei die Kühlkanäle (4) über einen Abschnitt ihrer Länge zum Permanentmagnetrotor (5) hin offen ausgeführt sind, **dadurch gekennzeichnet, dass** der Lagerschild (2) eine vorspringende ringförmige Lageraufnahme (15) aufweist, deren Durchmesser an den Innendurchmesser der Statorumspritzung (6) angepasst ist, wobei der Außenumfang der Lageraufnahme (15) einen Teilabschnitt der Kühlkanäle (4) bildet.

2. Gleichstrommotor nach Anspruch 1, **dadurch gekennzeichnet, dass** die Kühlkanäle (4) zumindest in einem ersten Abschnitt ihrer Länge zum Permanentmagnetrotor (5) hin geschlossen sind.

3. Gleichstrommotor nach Anspruch 1 oder 2, **dadurch gekennzeichnet, dass** die Kühlkanäle (4) unter einem flachen Winkel α zu einer Motordrehachse (12) verlaufen.

4. Gleichstrommotor nach Anspruch 3, **dadurch gekennzeichnet, dass** der Winkel α zwischen 4° und 8°, vorzugsweise 6° beträgt.

5. Gleichstrommotor nach Anspruch 1, 2, 3 oder 4 und mindestens einem der folgenden Ansprüche, **dadurch gekennzeichnet, dass** die Breite der Kühlkanäle (4) sich mit Abstand zum Lagerschild (2) verringert, insbesondere um einen Winkel β von 0,5 bis 2°, vorzugsweise 1,25°.

6. Gleichstrommotor nach Anspruch 1, 2, 3, 4 oder 5, **dadurch gekennzeichnet, dass** mehrere Kühlkanäle (4) in einen Sammelkanal (7) münden.

7. Gleichstrommotor nach Anspruch 6, **dadurch gekennzeichnet, dass** der Sammelkanal (7) einerseits aus dem Lagerschild (2) und andererseits aus der Statorumspritzung (6) der Statorwicklung (3) besteht.

8. Gleichstrommotor nach Anspruch 6 oder 7, **dadurch gekennzeichnet, dass** der Lagerschild (2) einen Strömungsdurchgang (8) vom Sammelkanal (7) zu einer Pumpenkammer aufweist.

9. Gleichstrommotor nach einem der vorherigen Ansprüche, **dadurch gekennzeichnet, dass** die Lageraufnahme (15) einen ersten Abschnitt zur Aufnahme eines Lagers, insbesondere eines Kugellagers (16) und einen zweiten Abschnitt zur Aufnahme einer Federscheibe (17) aufweist.

10. Gleichstrommotor nach einem der vorherigen Ansprüche, **dadurch gekennzeichnet, dass** die Statorumspritzung (6) eine zum Lagerschild (2) hin offene ringförmige Aufnahmenut (13) für eine Ringschnurdichtung (14) aufweist.

11. Gleichstrommotor nach einem der vorherigen Ansprüche, **dadurch gekennzeichnet, dass** die Statorumspritzung (6) aus einem Duroplastmaterial besteht.

## Claims

1. A DC motor (1) with fluid through-flow, having an end shield (2), a stator winding (3), arranged in grooves (11) of a stator core and with free spaces for cooling channels (4) between stator coils of the stator winding (3), and a permanent magnet rotor (5), wherein the cooling channels (4) are partially formed by a stator encapsulation (6), composed of plastics material, which encloses the stator core and the stator coils and partially by the end shield (2) and wherein the cooling channels (4) are configured to be open towards the permanent magnet rotor (5) over a portion of their length, **characterised in that** the end shield (2) has a projecting, annular bearing receiver (15) whose diameter is matched to the inner diameter of the stator encapsulation (6), wherein the outer circumference of the bearing receiver (15) forms a partial portion of the cooling channels (4).

2. A DC motor according to claim 1, **characterised in that** the cooling channels (4) are closed towards the permanent magnet rotor (5), at least in a first portion of their length.

3. A DC motor according to claim 1 or 2, **characterised in that** the cooling channels (4) run at a flat angle α to a motor rotational axis (12).

4. A DC motor according to claim 3, **characterised in that** the angle α is between 4°and 8°, is preferably 6°.

5. A DC motor according to claim 1, 2, 3 or 4 and at least one of the following claims, **characterised in that** the width of the cooling channels (4) decreases with increased distance from the end shield (2), in particular by an angle β from 0.5 to 2°, preferably 1.25°.

6. A DC motor according to claim 1, 2, 3, 4 or 5, **characterised in that** a plurality of cooling channels (4) open into a collecting channel (7).

7. A DC motor according to claim 6, **characterised in that** the collecting channel (7) consists of the end shield (2) on the one hand and of the stator encapsulation (6) of the stator winding (3) on the other hand.

8. A DC motor according to claim 6 or 7, **characterised in that** the end shield (2) has a flow passage (8) from the collecting channel (7) to a pump chamber.

9. A DC motor according to any one of the preceding claims, **characterised in that** the bearing receiver (15) has a first portion for receiving a bearing, in particular a ball bearing (16), and a second portion for receiving a spring washer (17).

10. A DC motor according to any one of the preceding claims, **characterised in that** the stator encapsulation (6) has an annular receiving groove (13), open towards the end shield (2), for a round cord seal (14).

11. A DC motor according to any one of the preceding claims, **characterised in that** the stator encapsulation (6) is composed of a thermosetting plastics material.

## Revendications

1. Moteur à courant continu (1) traversé par un liquide, avec un flasque (2), un enroulement statorique (3) disposé dans des rainures (11) d'un noyau statorique, lequel présente des espaces libres pour des canaux de refroidissement (4) entre des bobines de stator de l'enroulement statorique (3), et un rotor à aimants permanents (5), dans lequel les canaux de refroidissement (4) sont formés en partie par un surmoulage de stator (6) constitué de matière plastique, lequel renferme le noyau statorique et les bobines de stator, et en partie par le flasque (2), et dans lequel les canaux de refroidissement (4) sont réalisés de manière ouverte en direction du rotor à aimants permanents (5) sur une section de leur longueur, **caractérisé en ce que** le flasque (2) présente un logement de palier annulaire (15) en saillie, dont le diamètre est adapté au diamètre intérieur du surmoulage de stator (6), dans lequel la périphérie extérieure du logement de palier (15) forme une section partielle des canaux de refroidissement (4).

2. Moteur à courant continu selon la revendication 1, **caractérisé en ce que** les canaux de refroidissement (4) sont fermés au moins dans une première section de leur longueur en direction du rotor à aimants permanents (5).

3. Moteur à courant continu selon la revendication 1 ou 2, **caractérisé en ce que** les canaux de refroidissement (4) s'étendent selon un angle α plat par rapport à un axe de rotation de moteur (12).

4. Moteur à courant continu selon la revendication 3, **caractérisé en ce que** l'angle α est compris entre 4° et 8°, de préférence atteint 6°.

5. Moteur à courant continu selon la revendication 1, 2, 3 ou 4 et au moins l'une des revendications suivantes, **caractérisé en ce que** la largeur des canaux de refroidissement (4) diminue à distance du flasque (2), en particulier selon un angle β de 0,5 à 2°, de préférence de 1,25°.

6. Moteur à courant continu selon la revendication 1, 2, 3, 4 ou 5, **caractérisé en ce que** plusieurs canaux de refroidissement (4) débouchent dans un canal de collecte (7).

7. Moteur à courant continu selon la revendication 6, **caractérisé en ce que** le canal de collecte (7) est constitué d'une part du flasque (2) et d'autre part du surmoulage de stator (6) de l'enroulement statorique (3).

8. Moteur à courant continu selon la revendication 6 ou 7, **caractérisé en ce que** le flasque (2) présente un passage d'écoulement (8) du canal de collecte (7) à une chambre de pompage.

9. Moteur à courant continu selon l'une quelconque des revendications précédentes, **caractérisé en ce que** le logement de palier (15) présente une première section pour le logement d'un palier, en particulier d'un roulement à billes (16) et une deuxième section pour le logement d'une rondelle élastique (17).

10. Moteur à courant continu selon l'une quelconque des revendications précédentes, **caractérisé en ce que** le surmoulage de stator (6) présente une rainure de logement (13) annulaire ouverte en direction du flasque (2) pour un joint torique (14).

11. Moteur à courant continu selon l'une quelconque des revendications précédentes, **caractérisé en ce que** le surmoulage de stator (6) est constitué d'un matériau en résine thermodurcissable.
